# EUROPEAN PATENT SPECIFICATION

(11) **EP 4 242 906 B1**
(45) Date of publication and mention of the grant of the patent: **22.10.2025**
(21) Application number: 21911296.8
(22) Date of filing: 01.12.2021
(51) Int. Cl.: G06K 7/00

(54) **METHOD FOR PREVENTING MIXING OF CARD TRAYS, AND ELECTRONIC DEVICE FOR SUPPORTING SAME**
VERFAHREN ZUR VERHINDERUNG DES MISCHENS VON KARTENTABLETTS UND ELEKTRONISCHE VORRICHTUNG ZUR UNTERSTÜTZUNG DAVON
PROCÉDÉ POUR ÉVITER LE MÉLANGE DE PLATEAU À CARTE, ET DISPOSITIF ÉLECTRONIQUE PRENANT EN CHARGE LEDIT PROCÉDÉ

(30) Priority: 22.12.2020 KR 20200181059
(43) Date of publication of application: 13.09.2023
(73) Proprietor: Samsung Electronics Co., Ltd., Suwon-si, Gyeonggi-do 16677 (KR)
(72) Inventor: KIM, Honggyu, Suwon-si Gyeonggi-do 16677 (KR); KIM, Jonghwa, Suwon-si Gyeonggi-do 16677 (KR)
(74) Representative: Gulde & Partner
(86) International application number: PCT/KR2021/017943
(87) International publication number: WO 2022/139229

(56) References cited:
- WO-A1-2017/039872
- KR-A- 20160 107 832
- KR-A- 20200 100 139
- KR-B1- 101 666 851
- KR-B1- 102 120 399
- US-A1- 2007 249 199
- US-A1- 2016 268 711
- US-A1- 2016 359 247

## Description

### [Technical Field]

Various embodiments disclosed in the disclosure relate to an electronic device, and specifically, to a method for preventing erroneous insertion of a card tray and an electronic device for supporting the same.

### [Background Art]

An electronic device such as a smart phone or a tablet PC is used with a mounted subscriber identity module card containing information for identifying a subscriber. The subscriber identity module card may be formed as various cards such as a universal subscriber identity module (USIM), a subscribe identity module (SIM), or a user identity module (UIM). In addition, it is common to insert or withdraw various types of memory cards for additional data storage into or from the electronic device. The memory cards are released in various forms such as a SD card and a micro SD card.

To allow such cards (the subscriber identity module card and the memory card) to be inserted into the electronic device and be in contact with and in communication with an internal terminal, a socket for firmly seating the inserted card and fixing the card so as not to be withdrawn arbitrarily may be disposed inside the electronic device, and the card may be inserted into the electronic device by being mounted in a separate card tray that may be supported by the socket.

Such card tray may include a single tray capable of mounting only one card and a dual tray capable of mounting two (or more) cards.

KR 10-2016-0107832 A and KR 10-2020-0100139 A disclose conventional card trays detachable from an electronic device and electronic devices including the same. KR 101 666 851 B1 discloses conventional card tray including a dummy contact.

### [Disclosure]

### [Technical Problem]

A single tray and a dual tray according to the prior art are manufactured in similar forms except for the number of cards that may be mounted, so that it is difficult to distinguish whether the single tray is inserted or the dual tray is inserted in a state of being inserted into an electronic device.

Accordingly, when the single tray is erroneously inserted into an electronic device that supports dual SIM cards in a production stage, a problem in that a user cannot use the dual SIM card function may occur.

### [Technical Solution]

The invention is defined by the appended set of claims. The description that follows is subjected to this limitation. Any disclosure lying outside the scope of said claims is only intended for illustrative as well as comparative purposes.

### [Advantageous Effects]

The card tray according to various embodiments disclosed in the disclosure may electrically connect the data terminal and the ground terminal of the tray socket to each other using the dummy contact to change the voltage level of the data terminal, and the electronic device may determine whether the mounted card tray is erroneously inserted based on the voltage level of the data terminal of the tray socket changed by the dummy contact.

The electronic device according to various embodiments disclosed in the disclosure may determine whether the mounted card tray is erroneously inserted so as to solve the problem of limited dual SIM card function resulted from the erroneous insertion of the single tray into the electronic device that supports dual SIM cards.

Effects obtainable from the disclosure are not limited to the effects mentioned above.

### [Description of Drawings]

FIG. 1 is a block diagram of an electronic device in a network environment according to various embodiments.
FIG. 2 is a perspective view of an electronic device according to various embodiments.
FIG. 3A is a diagram illustrating a tray recognition device according to various embodiments.
FIG. 3B is a diagram for illustrating a state in which a card tray is inserted into a tray socket according to various embodiments.
FIG. 4 is a diagram for illustrating a dummy contact according to various embodiments.
FIG. 5 is a diagram showing another embodiment of a tray recognition device according to various embodiments.
FIG. 6 shows a configuration diagram of an electronic device for recognizing a mounted card tray according to various embodiments.
FIG. 7 is a flowchart illustrating an operation of recognizing a card tray in an electronic device according to various embodiments.

In relation to the description of the drawings, the same or similar reference numerals may be used for the same or similar components.

### [Mode for Invention]

Hereinafter, various embodiments of the disclosure will be described with reference to the accompanying drawings. However, this is not intended to limit the disclosure to specific embodiments, and it should be understood to include various modifications, equivalents, and/or alternatives of embodiments of the disclosure. In relation to description of the drawings, like reference numerals may be used for like components.

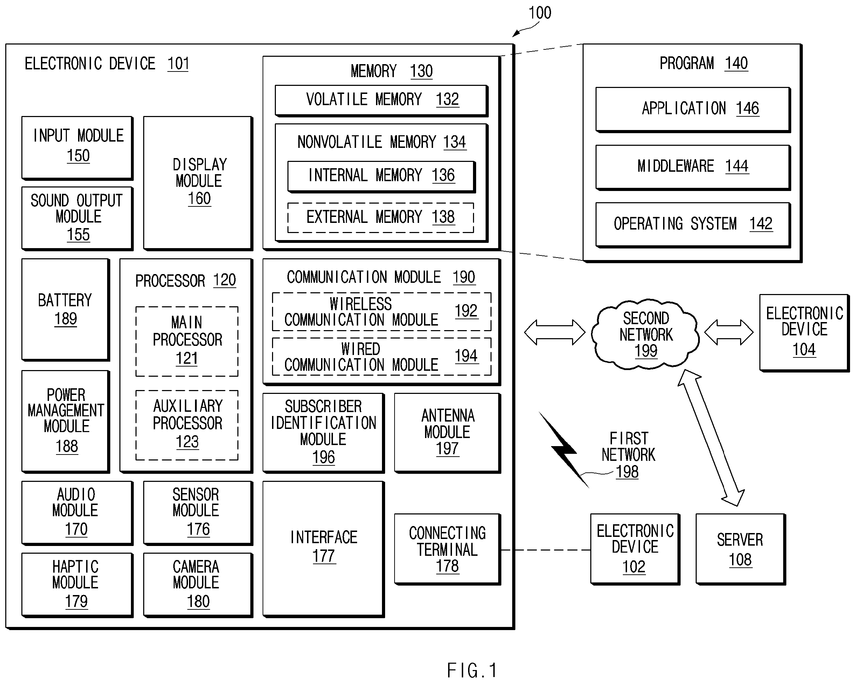

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, not covered by the claims, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

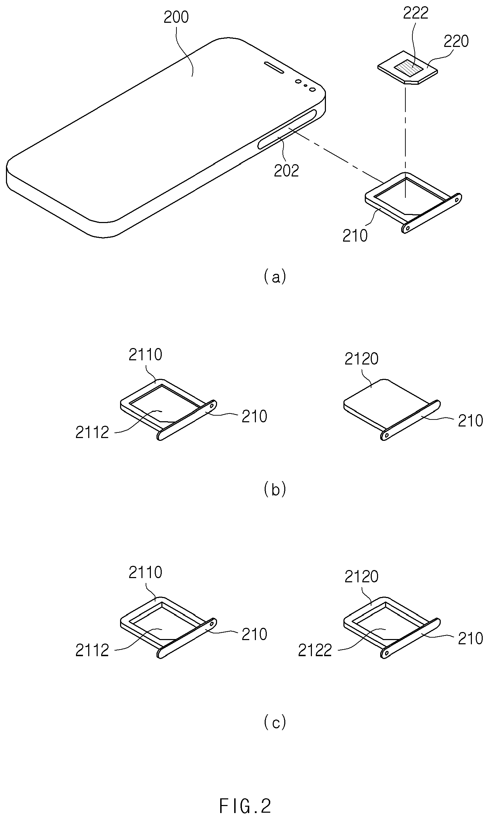

FIG. 2 is a perspective view of an electronic device according to various embodiments.

Referring to (a) in FIG. 2, an electronic device 200 (e.g., the electronic device 101) may be equipped with various cards 220 that may be inserted from the outside. The various cards 220 may include a subscriber identity module card (e.g., a USIM card, a SIM card, and the like) or a memory card (e.g., an SD card and a micro SD card). However, this is only exemplary, and the disclosure is not limited thereto. For example, the card 220 may also include various card-type external devices capable of providing additional functions via electrical connection with the electronic device 200.

According to various embodiments, the card 220 may be mounted in a card tray 210 and inserted into the electronic device 200. The card tray 210 may partially or entirely be inserted into the electronic device 200 via an opening 202 defined in an outer surface of the electronic device 200. When the card tray 210 is completely inserted into the electronic device 200, the card tray 210 may not be visible from the outside or may form an outer appearance of the electronic device 200 integrally.

According to various embodiments, the card tray 210 may include at least one card receiving portion 2112 or 2122 constructed to mount the card 220 therein. The at least one card receiving portion 2112 or 2122 may be defined as a groove corresponding to a shape of the card 220 such that the card 220 may be fixed therein. For example, as shown in (b) in FIG. 2, the card tray (e.g., a dual-sided single tray) 210 constructed to mount one card therein may be constructed such that the card receiving portion 2112 is defined in a first surface 2110 (e.g., a top surface) of the card tray 210 and card insertion is limited in a second surface 2120 (e.g., a bottom surface) of the card tray 210 opposite to the first surface 2110. As another example, as shown in (c) in FIG. 2, the card tray (a dual-sided dual tray) 210 constructed to mount two or more cards therein may have the first card receiving portion 2112 in which a first card is inserted in the first surface 2110 of the card tray 210 and have the second card receiving portion 2122 in which a second card different from the first card is inserted in the second surface 2120 of the card tray 210. According to one embodiment, the card 220 may be mounted in the at least one card receiving portion 2112 or 2122 such that at least one terminal 222 disposed on the card 220 is exposed, and the card 220 may be electrically connected to the electronic device 200 inside the electronic device 200 when the card tray 210 is completely mounted in the electronic device 200.

According to various embodiments, the electronic device 200 may include a tray recognition device for recognizing whether the mounted card tray 210 is a single tray (or the dual-sided single tray) or a dual tray (or the dual-sided dual tray) when the card tray 210 is mounted therein. According to one embodiment, when dual sim cards are supported, the tray recognition device may recognize the mounting of the single tray and notify the recognition result, thereby preventing a situation in which a user cannot use the dual SIM cards.

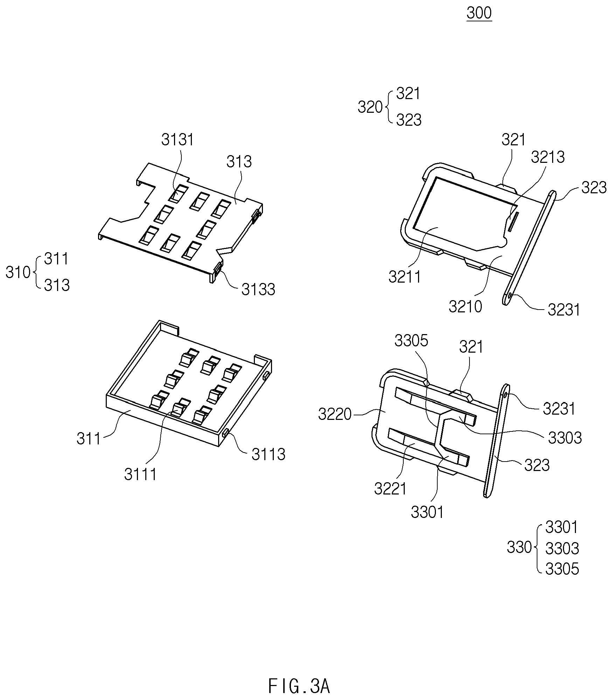

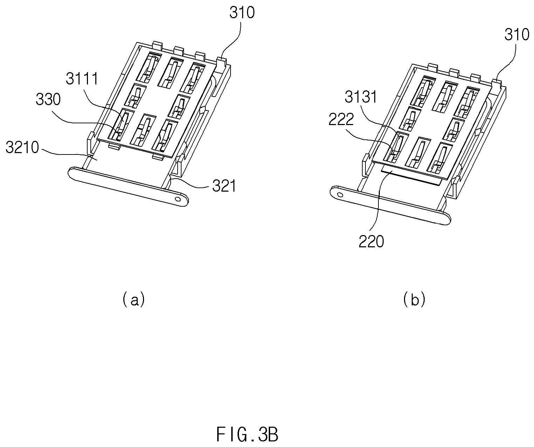

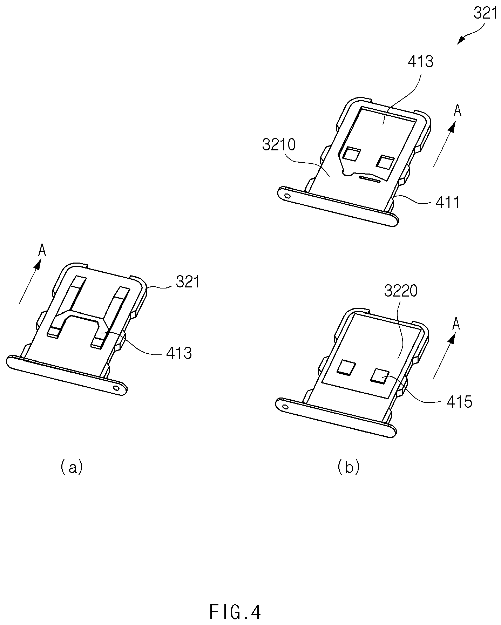

FIG. 3A is a diagram illustrating a tray recognition device according to various embodiments. **In** addition, FIG. 3B is a diagram for illustrating a state in which a card tray is inserted into a tray socket according to various embodiments, and FIG. 4 is a diagram for illustrating a dummy contact according to various embodiments.

Referring to FIG. 3A, a tray recognition device 300 may include a tray socket 310 (or a tray connector), a card tray 320, and a dummy contact 330.

According to various embodiments, a description will be made assuming that the card tray 320 is the dual-sided single tray described above with reference to FIG. 2. According to one embodiment, the card tray 320 may include a tray body 321 inserted into the electronic device 200 via the opening 202 and a tray cover 323 disposed at one end of the tray body 321.

According to various embodiments, the tray body 321 may include at least one card receiving portion 3211 in which the card 220 is mounted. The at least one card receiving portion 3211 may be defined in a first area of the tray body 321, for example, a first surface 3210 (e.g., a top surface) of the tray body 321. For example, the tray body 321 may be constructed such that the card 220 is mounted only in the first surface 3210 of the tray body 321, and the insertion of the card 220 is limited in a second area opposite to the first surface 3210, for example, a second surface 3220 (e.g., a bottom surface) of the tray body 321. The at least one card receiving portion 3211 may include a card pressing portion 3213 that protrudes toward the other end of the tray body 321 (e.g., in a direction opposite to the tray cover 323) in a space in which the card 220 is mounted and presses a bottom surface of the inserted card 220. The card pressing portion 3213 may firmly seat the card 220 in the card receiving portion 3211 and fix the card 220 so as not to be arbitrarily withdrawn from the card receiving portion 3211.

According to various embodiments, the tray cover 323 is a portion exposed to the outside of the electronic device 200 when the card tray 320 is mounted in the electronic device 200. The tray cover 323 may be disposed in a manner that matches or does not match the outer surface of the electronic device 200. For example, a pin insertion hole 3231 into which at least a portion of a pin for withdrawing the card tray may extend into the electronic device 200 may be defined in the tray cover 323. The tray cover 323 may be integrally formed with the tray body 321 or may be formed as a different member and coupled to the tray body 321.

According to various embodiments, the tray socket 310 may include a base 311 and a base cover 313 coupled to the base 311 from above. The card tray 320 may be accommodated in a space between the base 311 and the base cover 313. The base 311 and the base cover 313 may be integrally formed with each other. In addition, the base 311 and the base cover 313 may also be constructed as separate components. In this case, one of the base 311 and the base cover 313 may have at least one hook, and the other may have a ring coupled to the hook. For example, at least one hook 3133 extending downward may be disposed at an edge of the base cover 313, at least one ring 3113 may be disposed at an edge of the base 311, and the base cover 313 may be coupled to the base 311 from above by coupling of the hook 3133 and the ring 3113. However, this is only exemplary, and the base 311 and the base cover 313 may be coupled to each other in various known methods and structures.

According to various embodiments, the base 311 may be mounted on a substrate disposed inside the electronic device 200. However, the disclosure may not be limited thereto, and the base 311 may be disposed at various positions corresponding to the opening 202 defined in the electronic device 200 described above. At least one first terminal 3111 may be disposed on a bottom surface of the base 311. The at least one first terminal 3111 may be disposed to face the second surface 3220 of the inserted card tray 320, and may protrude (or extend) from an inner bottom surface of the base 311 toward the base cover 313. For example, the first terminal 3111 may include at least one of a terminal (e.g., a Vcc terminal) for applying operating voltage to the card 220, a terminal (e.g., an RST terminal) for inputting a reset signal, a terminal (e.g., a CLK terminal) for inputting a clock signal, a terminal (e.g., a Vpp terminal) for inputting programming voltage, a data terminal (e.g., an I/O terminal) for data input/output, a ground terminal (e.g., a GND terminal) used for grounding, or a terminal (e.g., an RFU terminal) for which use is not specified. As shown in (a) in FIG. 3B, the at least one first terminal 3111 may be electrically connected to the dummy contact 330 to be described later when the tray body 321 (or the card tray 320) is accommodated in the tray socket 310. In one example, although not shown, when the dual-sided dual tray is accommodated in the tray socket 310, the at least one first terminal 3111 may be electrically connected to a terminal of the second card (e.g., the card mounted in the second surface 3220) corresponding thereto.

According to various embodiments, like the base 311, the base cover 313 may also have at least one second terminal 3131. According to one embodiment, the at least one second terminal 3131 may be disposed to face the first surface 3210 of the inserted card tray 320 and may protrude from a bottom surface of the base cover 313 toward the base 311. For example, the second terminal 3131 may also include at least one of the terminal (e.g., the Vcc terminal) for applying the operating voltage, the terminal (e.g., the RST terminal) for inputting the reset signal, the terminal (e.g., the CLK terminal) for inputting the clock signal, the terminal (e.g., the Vpp terminal) for inputting the programming voltage, the data terminal (e.g., the I/O terminal) for the data input/output, the ground terminal (e.g., the GND terminal) used for the grounding, or the terminal (e.g., the RFU terminal) for which the use is not specified. As shown in (b) in FIG. 3B, when the tray body 321 (or the card tray 320) is accommodated in the tray socket 310, the at least one second terminal 3131 may be electrically connected to the terminal 222 of the card 220 (e.g., the card 220 mounted in the first surface 3210) corresponding thereto.

According to various embodiments, the dummy contact 330 may be configured to electrically connect the one or more first terminals 3111 disposed inside the tray socket 310 to each other when the tray body 321 is accommodated in the tray socket 310. According to one embodiment, the dummy contact 330 may be configured to electrically connect the data terminal (e.g., the I/O terminal) and the ground terminal (e.g., the GND terminal) of the tray socket 310 (e.g., the base 311) to each other. For example, the dummy contact 330 may electrically connect the data terminal and the ground terminal of the tray socket 310 (e.g., the base 311) to each other so as to change a voltage level of the data terminal to a predetermined voltage level (high → low or low → high). However, this is only exemplary, and the description of the disclosure is not limited thereto. For example, the dummy contact 330 may be configured to connect the data terminal and another terminal of the tray socket 310 to the ground terminal or to connect said another terminal instead of the data terminal to the ground terminal.

According to various embodiments, the dummy contact 330 may be composed of contact portions 3301 and 3303 and a connection portion 3305. Assuming that the dummy contact 330 is configured to connect the data terminal and the ground terminal of the tray socket 310 to each other, the contact portions 3301 and 3303 may include the first contact portion 3301 constructed to be in contact with the data terminal of the tray socket 310 and the second contact portion 3303 constructed to be in contact with the ground terminal of the tray socket 310. In addition, the connection portion 3305 may be constructed to connect the first contact portion 3301 and the second contact portion 3303 to each other, and may be disposed so as not to be in contact with other terminals (e.g., the RST terminal, the CLK, and the like) of the tray socket 310 that are not in contact with the contact portions 3301 and 3303.

According to various embodiments, the dummy contact 330 may be disposed on the second surface 3220 of the tray body 321 opposite to the first surface 3210 where the card receiving portion 3211 is defined. The dummy contact 330 may be disposed on the second surface 3220 of the tray body 321 so as to face the data terminal and the ground terminal of the tray socket 310 when mounted in the tray socket 310. However, when the card receiving portion 3211 is defined in the second surface 3220 of the tray body 321, the dummy contact 330 may be disposed on the first surface 3210 of the tray body 321. According to one embodiment, as shown in (a) in FIG. 4, the tray body 321 may be formed by injection-molding of a single material (e.g., a synthetic resin material), or the dummy contact 330 may be formed by a metal member 413 that is coated or attached to cover at least a portion of a surface of the tray body 321. According to another embodiment, as shown in (b) in FIG. 4, the tray body 321 may be formed by coupling of an inj ection-molded portion 411 made of the synthetic resin material and the metal member 413, and at least a portion of such metal member 413 may be used as the dummy contact 330. For example, the metal member 413 may be disposed on the first surface 3210 of the tray body 321 to increase strength of the tray body 321, and at least the portion of such metal member 413 may be exposed 415 to the second surface 3220 of the tray body 321 via a through hole defined in the tray body 321 so as to be formed as the dummy contact 330.

According to various embodiments, the card tray 320 may include a sliding guide 3221. The sliding guide 3221 may be formed to be concave such that the card tray 320 slides while being seated on the terminal (e.g., the at least one first terminal 3111) of the tray socket 310. The sliding guide 3221 may be disposed on the second surface 3220 of the tray body 321, and may extend in a bar shape along an insertion direction (a direction 'A') of the card tray 320. For example, while the card tray 320 is inserted into the tray socket 310, the sliding guide 3221 slides along the terminal of the tray socket 310, so that the card tray 320 may be easily inserted into the tray socket 310. In addition, the sliding guide 3221 may include a concave surface having a certain level of curvature 'R', so that interference between the terminal of the tray socket 310 and the card tray 320 may be reduced.

According to various embodiments, the tray recognition device 300 may further include other components in addition to the above-described components. According to one embodiment, the tray recognition device 300 may include tray recognizing means for recognizing the mounting of the card tray 320 and tray discharging means for discharging the mounted card tray 320. Such components are general components of the electronic device 200 to which the card tray 320 is applied, and descriptions thereof are omitted.

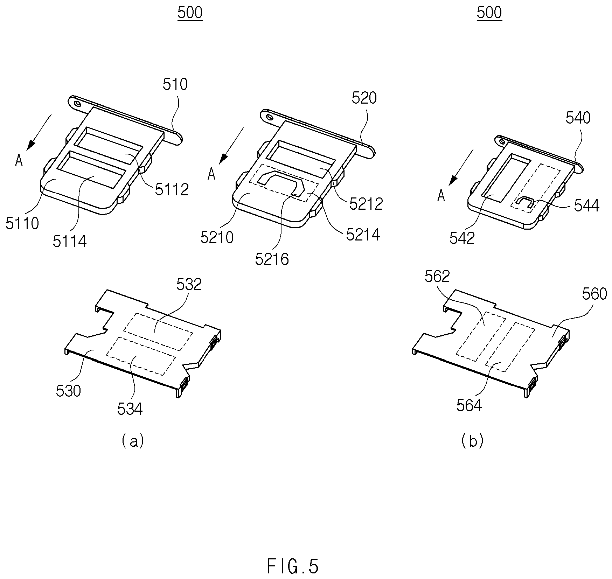

FIG. 5 is a diagram showing another embodiment of a tray recognition device according to various embodiments.

A tray recognition device 500 shown in FIG. 5 is distinguished from the tray recognition device 300 described above in FIG. 3 in that the card receiving portion in which the card is mounted and the dummy contact are arranged in the same surface of the tray body, and has a basic configuration similar to that in FIG. 3 described above.

Referring to (a) in FIG. 5, the electronic device 200 may support a single-sided dual tray 510 and a single-sided single tray 520. In the single-sided dual tray 510, a first card receiving portion may be defined in a first area 5112 of a first surface 5110 (e.g., a top surface) of a tray body, a second card receiving portion may be defined in a second area 5114 of the first surface 5110, and card insertion may be limited in a second surface (e.g., a bottom surface) opposite to the first surface 5110. In the single-sided single tray 520, a card receiving portion may be defined in a first area 5212 of a first surface 5210 of a tray body, and card insertion may be limited in a second area 5214 of the first surface 5210 and a second surface.

According to various embodiments, the tray recognition device 500 may include a base cover 530 equipped with at least one first terminal and at least one second terminal, and the single-sided single tray 520 having a dummy contact 5216. The at least one first terminal and the at least one second terminal may be respectively disposed in a first cover area 532 and a second cover area 534 of the base cover 530 so as to face the first surfaces 5110 and 5210 of the inserted card trays 510 and 520. According to one embodiment, when the tray body (or the card tray) is accommodated in the tray socket, the at least one first terminal may be electrically connected to a terminal of a card (e.g., a card mounted in the first area 5212) corresponding thereto. In addition, when the tray body (or the card tray) is accommodated in the tray socket, the at least one second terminal may be electrically connected to the dummy contact 5216 mounted in the second area 5214 to be described later. In one example, when the single-sided dual tray 510 is accommodated in the tray socket, the at least one second terminal may be electrically connected to a terminal of a card (e.g., a card mounted in the second area 5114) corresponding thereto.

According to various embodiments, the dummy contact 5216 may be disposed in the second area 5214 defined on the first surface 5210 of the single-sided single tray (the tray body). When the tray body is accommodated in the tray socket, the dummy contact 5216 may electrically connect the one or more second terminals disposed inside the tray socket to each other so as to change the voltage level of the data terminal to the predetermined level (high → low or low → high).

According to various embodiments, unlike a structure in (a) in FIG. 5 in which the dummy contact and the card receiving portion are sequentially arranged in the insertion direction (the direction 'A') of the card tray, in a single-sided single tray 540, a card receiving portion 542 and a dummy contact 544 may be arranged perpendicular to the insertion direction of the tray body as shown in (b) in FIG. 5. In this case, at least one first terminal 562 and at least one second terminal 564 arranged on a tray cover 560 may also be arranged perpendicular to the insertion direction of the tray body so as to respectively correspond to the card receiving portion 542 and the dummy contact 544.

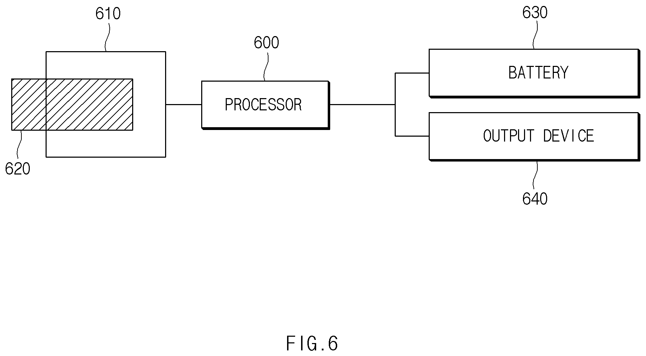

FIG. 6 shows a configuration diagram of an electronic device for recognizing a mounted card tray according to various embodiments.

Referring to FIG. 6, the electronic device 200 may include a processor 600, a tray socket 610, a card tray 620, a battery 630, and an output device 640. However, this is shown centering on a configuration for recognizing the card tray 620, and a configuration of the electronic device 200 is not limited thereto. For example, at least one of the above components may be omitted from the configuration of the electronic device 200 or at least one component other than the above component may be added to the configuration of the electronic device 200.

According to various embodiments, the processor 600 (e.g., the processor 120) may control overall operation of the electronic device 200. As at least a portion of the overall operation of the electronic device 200, the processor 600 may recognize mounting of the card tray 620. A method and a structure for recognizing the mounting of the card tray 620 are known via various documents, and thus a description thereof will be omitted.

According to various embodiments, in response to the recognition of the mounting of the card tray 620, the processor 600 may apply operating voltage to the tray socket 610. According to one embodiment, the processor 600 may control the battery 630 to continuously apply the operating voltage to at least one terminal disposed on the tray socket 610. A voltage level of the at least one terminal to which the operating voltage is continuously applied may maintain a first state (e.g., a state equal to or higher than (or higher than) a specified voltage, a high state). However, this is only exemplary, and the description of the disclosure is not limited thereto. For example, the first state may be a low state. The at least one terminal to which the operating voltage is continuously applied may include the data terminal.

According to various embodiments, the processor 600 may measure the voltage level of the at least one terminal to which the operating voltage is applied. According to various embodiments, when the card tray 620 equipped with a dummy contact is mounted in the tray socket 610, the data terminal of the tray socket 610 may be electrically connected to a ground terminal of the tray socket 610 by the dummy contact. When the operating voltage is applied while the data terminal and the ground terminal of the tray socket 610 are electrically connected to each other as such by the dummy contact, the voltage level of the data terminal may maintain a second state (e.g., a state equal to or lower than (or lower than) the specified voltage, the low state) different from the first state. In addition, when the card tray 620 without the dummy contact is mounted in the tray socket 610, the operating voltage may be applied while the data terminal and the ground terminal of the tray socket 610 are not electrically connected to each other, so that the voltage level of the data terminal of the tray socket 610 may maintain the first state.

According to various embodiments, the processor 600 may recognize a type of the mounted card tray 620 based on the voltage level of the data terminal. According to one embodiment, when sensing the voltage level in the first state of the terminal to which the operating voltage is applied, the processor 600 may recognize mounting of the dual tray. In addition, when sensing the voltage level in the second state of the terminal to which the operating voltage is applied, the processor 600 may recognize mounting of the single tray equipped with the dummy contact. In this regard, the processor 600 may notify the recognition result via the output device 640. The processor 600 may notify the mounting of the single tray. For example, the output device 640 may include the sound output module 155 (e.g., a speaker), and the processor 600 may output the recognition result by outputting sound of a predetermined pattern. As another example, the output device 640 may include the display module 160, and the processor 600 may output the recognition result by outputting predetermined visual information. However, this is only exemplary, and the method for notifying the recognition result is not limited thereto. For example, the recognition result may be output in various schemes such as a predetermined vibration pattern or light emission pattern.

According to various embodiments, the processor 600 may perform a card recognition operation before recognizing the mounted card tray 620. The card recognition operation is an operation of determining whether a card is mounted in the card tray 620. The card recognition operation may be performed as the processor 600 inputs a predetermined confirmation signal to the tray socket 610 and receives a response to the input confirmation signal from the tray socket 610. For example, the confirmation signal may include at least one of a clock signal and a reset signal input in the state in which the voltage is applied to the tray socket 610, and the response signal may include an answer to reset (ATR) signal output by the card mounted in the card tray 620 in response to the confirmation signal.

According to one embodiment, the processor 600 may recognize the mounting of the dual tray when responses of the first card and the second card are output via the tray socket 610. According to another embodiment, the processor 600 may perform the above-described card tray recognition operation when the response is not output from at least one of the first card and the second card via the tray socket 610. In this regard, as described above, when sensing the voltage level in the first state of the terminal to which the operating voltage is applied, the processor 600 may determine that, although the dual tray is mounted, at least one card is not mounted in the dual tray. In addition, when sensing the voltage level in the second state of the terminal to which the operating voltage is applied, the processor 600 may recognize the mounting of the single tray.

A card tray (e.g., the card tray 320) detachable from an electronic device (e.g., the electronic device 200) includes a tray body (e.g., the tray body 321) accommodated in a tray socket (e.g., the tray socket 310) of the electronic device, a tray cover (the tray cover 323) disposed at an end of the tray body, a card receiving portion (e.g., the card receiving portion 3211) defined in a first area of the tray body and accommodating at least one card, and a dummy contact (e.g., the dummy contact 330) disposed in a second area of the tray body different from the first area, wherein the dummy contact electrically connects a ground terminal of the tray socket to at least one other terminal when the tray body is mounted in the tray socket.

According to various embodiments, the first area may be defined in a first surface (e.g., the first surface 3210) of the tray body, and the second area may be defined in a second surface (e.g., the second surface 3220) of the tray body opposite to the first surface.

According to various embodiments, the first area and the second area may be defined in the same surface of the tray body, and the first area and the second area may be defined along an insertion direction of the card tray.

According to various embodiments, the first area and the second area may be defined in the same surface of the tray body, and the first area and the second area may be defined so as to be perpendicular to an insertion direction of the card tray.

According to various embodiments, the dummy contact may electrically connect a data terminal and the ground terminal of the tray socket to each other.

According to various embodiments, the dummy contact may be disposed on a portion of the tray body facing the data terminal and the ground terminal of the tray socket when mounted in the tray socket.

An electronic device (e.g., the electronic device 200) according to various embodiments includes a housing forming an outer appearance of the electronic device, a card tray (e.g., the card tray 320) including a first area where at least one card is inserted, wherein the card tray is detachable from an interior of the housing via an opening (e.g., the opening 202) defined in a portion of a side surface of the housing, a tray socket (e.g., the tray socket 310) connected to the opening and defining a space where the card tray is accommodated, at least one first terminal (e.g., the first terminal 3111) disposed inside the tray socket so as to extend toward a second area of the card tray different from the first area of the card tray accommodated in the tray socket, at least one second terminal (e.g., the second terminal 3131) disposed inside the tray socket so as to extend toward the first area of the card tray accommodated in the tray socket, and a dummy contact (e.g. the dummy contact 330) disposed in the second area of the card tray, wherein the dummy contact is in contact with the at least one first terminal so as to change a first voltage level of the at least one first terminal to a predetermined second voltage level.

According to various embodiments, the at least one second terminal may be electrically connected to the at least one card inserted into the first area while the card tray is accommodated in the tray socket.

According to various embodiments, the at least one first terminal may include a data terminal and a ground terminal, and the data terminal and the ground terminal may be electrically connected to each other by the dummy contact when the card tray is accommodated in the tray socket.

According to various embodiments, the first area may be defined in a first surface (e.g., the first surface 3210) of the card tray, and the second area may be defined in a second surface (e.g., the second surface 3220) of the card tray opposite to the first surface.

According to various embodiments, the first area and the second area may be defined in the same surface of the card tray, and the first area and the second area may be defined along an insertion direction of the card tray.

According to various embodiments, the first area and the second area may be defined in the same surface of the tray body, and the first area and the second area may be defined so as to be perpendicular to an insertion direction of the card tray.

According to various embodiments, the dummy contact may be disposed on a portion of the card tray facing a data terminal and a ground terminal of the tray socket when accommodated in the tray socket.

According to various embodiments, the dummy contact may change a voltage level in a first state of the at least one first terminal to a voltage level in a second state. For example, the voltage level in the first state may be equal to or higher than a specified voltage, and the voltage level in the second state may be lower than the specified voltage.

According to various embodiments, the electronic device may further include a processor electrically connected to the at least one first terminal and the at least one second terminal. The processor may apply power to the at least one first terminal in response to the card tray being inserted into the tray socket and then sense a voltage level of the at least one first terminal, and determine that the inserted card tray supports a single SIM card when the predetermined second voltage level is sensed for the at least one first terminal.

According to various embodiments, the electronic device may further include an output device electrically connected to the processor, and the processor may output a result of the determination via the output device.

According to various embodiments, the processor may determine whether a card is mounted in the card tray, and sense a voltage level of the at least one second terminal in response to determining that the card is not mounted.

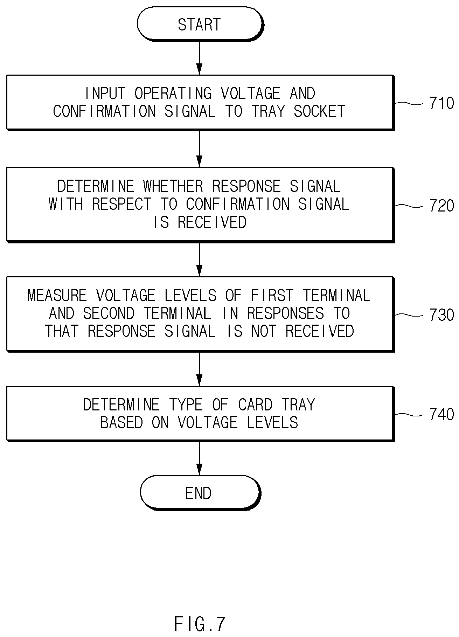

FIG. 7 is a flowchart illustrating an operation of recognizing a card tray in an electronic device according to various embodiments.

Referring to FIG. 7, in operation 710, the electronic device 200 (or the processor 600) according to various embodiments may input the operating voltage and the confirmation signal to the tray socket 310. The operation of inputting the operating voltage and the confirmation signal may be a portion of the card recognition operation. According to one embodiment, in response to sensing of the mounting of the card tray 320, the electronic device 200 may apply the confirmation signal including at least one of the clock signal and the reset signal in the state in which the operating voltage is applied to the tray socket 310. For example, the operating voltage and the confirmation signal may be applied to the first terminal of the tray socket 310 in contact with the first surface of the card tray and the second terminal in contact with the second surface of the card tray.

According to various embodiments, in operation 720, the electronic device 200 (or the processor 600) may determine whether the response signal with respect to the confirmation signal is received via the first terminal and the second terminal. The response signal may include the answer to reset (ATR) signal output by the card 220 mounted in the card tray 320. It may be seen that the card tray 320 in which the card is normally inserted is mounted in the tray socket 310 when the response signal is received, and it may be seen that the card tray 320 in which the card is not inserted is mounted in the tray socket 310 when the response signal is not received.

According to various embodiments, in operation 730, when it is identified that the response signal is not received, the electronic device 200 (or the processor 600) may measure the voltage levels of the first terminal and the second terminal of the tray socket 310.

According to various embodiments, in operation 740, the electronic device 200 (or the processor 600) may determine a type of the card tray 320 based on the measured voltage levels. According to one embodiment, the electronic device 200 may determine that the single tray is mounted in response to one of the first terminal and the second terminal having the voltage level in the first state (e.g., high state) and the other having the voltage level in the second state (e.g., the low state). In addition, the electronic device 200 may determine that the dual tray is mounted in response to both the first terminal and the second terminal having the voltage level in the first state. This is a situation in which the dual tray is mounted but no response signal is received, which may indicate a state in which at least one card is not mounted in the dual tray.

According to various embodiments, the electronic device 200 (or the processor 600) may determine that the dual tray is mounted when sensing the reception of the response signal as the result of operation 720. This may be a state in which the two cards are normally installed in the dual tray.

An operating method of an electronic device (e.g., the electronic device 200) according to various embodiments, and not covered by the claims, includes inputting a confirmation signal to at least one first terminal (e.g., the first terminal 3111) and at least one second terminal (e.g., the second terminal 3131) of a tray socket (e.g., the tray socket 310) in response to mounting of a card tray (e.g., the card tray 320), determining whether a response signal with respect to the confirmation signal is output from the tray socket, measuring voltage levels of the at least one first terminal and the at least one second terminal in response to the output of the response signal not being sensed, and determining that the card tray supports a single SIM card in response to that the at least one first terminal has a voltage level in a first state and that the at least one second terminal has a voltage level in a second state.

According to various embodiments, the method may further include outputting a result of the determining operation.

According to various embodiments, the method may include determining that the card tray supports dual SIM cards in response to that the at least one first terminal and the at least one second terminal have the voltage level in the first state.

## Claims

1. A single card tray (320) detachable from an electronic device (200), the single card tray (320) comprising:
a tray body (321) comprising a card receiving portion (3211), and that is configured to be accommodated in a tray socket (310) of the electronic device (200), wherein the card receiving portion (3211) is defined in a first area of the tray body (321) and configured to accommodate a card (220);
a tray cover (323) disposed at an end of the tray body (321); and **characterized in that** the single card tray also comprises
a dummy contact (330) disposed in a second area of the tray body (321) different from the first area, wherein the dummy contact (330) electrically connects a ground terminal of the tray socket (310) to at least one other terminal when the tray body (321) is mounted in the tray socket (310).

2. The single card tray (320) of claim 1, wherein the first area is defined in a first surface (3210) of the tray body (321),
wherein the second area is defined in a second surface (3220) of the tray body (321) opposite to the first surface (3210).

3. The single card tray (320) of claim 1, wherein the first area and the second area are defined in the same surface of the tray body (321),
wherein the first area and the second area are defined along an insertion direction (A) of the single card tray (320).

4. The single card tray (320) of claim 1, wherein the first area and the second area are defined in the same surface of the tray body (321),
wherein the first area and the second area are defined so as to be perpendicular to an insertion direction (A) of the single card tray (320).

5. The single card tray (320) of claim 1, wherein the dummy contact (330) is configured to electrically connect a data terminal and the ground terminal of the tray socket (310) to each other.

6. The single card tray (320) of claim 1, wherein the dummy contact (330) is disposed on a portion of the tray body (321) facing a data terminal and the ground terminal of the tray socket (310) when mounted in the tray socket (310).

7. An electronic device (200) comprising the single card tray (320) of claim 1, the electronic device (200) comprising:
a housing forming an outer appearance of the electronic device (200), wherein the single card tray (320) is constructed to be detachable from an interior of the housing via an opening (202) defined in a portion of a side surface of the housing;
a tray socket (310) connected to the opening (202) and defining a space where the single card tray (320) is accommodated;
at least one first terminal (3111) disposed inside the tray socket (310) so as to extend toward the second area of the tray body (321) of the single card tray (320) accommodated in the tray socket (310), wherein the at least one first terminal (3111) comprises the ground terminal and the at least one other terminal; and
at least one second terminal (3131) disposed inside the tray socket (310) so as to extend toward the first area of the tray body (321) accommodated in the tray socket (310);
wherein the dummy contact (330) of the single card tray (320) is configured to be in contact with the at least one first terminal (3111) so as to change a first voltage level of the at least one first terminal (3111) to a predetermined second voltage level.

8. The electronic device (200) of claim 7, wherein the at least one second terminal (3131) is configured to be electrically connected to the card (220) insertable into the card receiving portion (3211) defined in the first area of the tray body (321) while the tray body (321) is accommodated in the tray socket (310).

9. The electronic device (200) of claim 7, wherein the at least other terminal includes a data terminal, and
wherein the data terminal and the ground terminal are electrically connected to each other by the dummy contact (330) when the tray body (321) is accommodated in the tray socket (310).

10. The electronic device (200) of claim 7, wherein the first area is defined in a first surface (3210) of the single card tray (320),
wherein the second area is defined in a second surface (3220) of the single card tray (320) opposite to the first surface (3210).

11. The electronic device (200) of claim 7, wherein the first area and the second area are defined in the same surface of the single card tray (320),
wherein the first area and the second area are defined along an insertion direction (A) of the single card tray (320).

12. The electronic device (200) of claim 7, wherein the first area and the second area are defined in the same surface of the tray body (321),
wherein the first area and the second area are defined so as to be perpendicular to an insertion direction (A) of the single card tray (320).

13. The electronic device (200) of claim 7,
wherein the at least other terminal includes a data terminal, and
wherein the dummy contact (330) is disposed on a portion of the tray body (321) facing a data terminal and a ground terminal of the tray socket (310) when accommodated in the tray socket (310).

14. The electronic device (200) of claim 7, further comprising:
a processor (600) electrically connected to the at least one first terminal (3111) and the at least one second terminal (3131),
wherein the processor (600) is configured to:
apply power to the at least one first terminal (3111) in response to the single card tray (320) being inserted into the tray socket (310) and then sense a voltage level of the at least one first terminal (3111); and
determine that the inserted single card tray (320) supports a single SIM card when the predetermined second voltage level is sensed for the at least one first terminal (3111).

15. The electronic device (200) of claim 14, further comprising:
an output device (640) electrically connected to the processor (600),
wherein the processor (600) is configured to output a result of the determination via the output device (640).

## Patentansprüche

1. Einzelkartenträger (320), der von einem elektronischen Gerät (200) abnehmbar ist, wobei der Einzelkartenträger (320) Folgendes umfasst:
einen Trägerkörper (321) mit einem Kartenaufnahmeabschnitt (3211), der so konfiguriert ist, dass er in einer Träger-Aufnahme (310) des elektronischen Geräts (200) aufgenommen sein kann, wobei der Kartenaufnahmeabschnitt (3211) in einem ersten Bereich des Trägerkörpers (321) definiert und zur Aufnahme einer Karte (220) konfiguriert ist;
eine Träger-Abdeckung (323), die an einem Ende des Trägerkörpers (321) angeordnet ist; **dadurch gekennzeichnet, dass** der Einzelkartenträger außerdem Folgendes umfasst:
einen Blindkontakt (330), der in einem zweiten Bereich des Trägerkörpers (321) angeordnet ist, der sich vom ersten Bereich unterscheidet, wobei der Blindkontakt (330) einen Masseanschluss der Träger-Aufnahme (310) mit mindestens einem weiteren Anschluss elektrisch verbindet, wenn der Trägerkörper (321) in der Träger-Aufnahme (310) montiert ist.

2. Einzelkartenträger (320) nach Anspruch 1, wobei der erste Bereich in einer ersten Oberfläche (3210) des Trägerkörpers (321) definiert ist,
wobei der zweite Bereich in einer zweiten Oberfläche (3220) des Trägerkörpers (321) definiert ist, die der ersten Oberfläche (3210) gegenüberliegt.

3. Einzelkartenträger (320) nach Anspruch 1, wobei der erste Bereich und der zweite Bereich in derselben Oberfläche des Trägerkörpers (321) definiert sind,
wobei der erste Bereich und der zweite Bereich entlang einer Einführrichtung (A) des Einzelkartenträgers (320) definiert sind.

4. Einzelkartenträger (320) nach Anspruch 1, wobei der erste Bereich und der zweite Bereich in derselben Oberfläche des Trägerkörpers (321) definiert sind,
wobei der erste Bereich und der zweite Bereich so definiert sind, dass sie senkrecht zu einer Einführrichtung (A) des Einzelkartenträgers (320) stehen.

5. Einzelkartenträger (320) nach Anspruch 1, wobei der Blindkontakt (330) so konfiguriert ist, dass er einen Datenanschluss und den Masseanschluss der Träger-Aufnahme (310) elektrisch miteinander verbindet.

6. Einzelkartenträger (320) nach Anspruch 1, wobei der Blindkontakt (330) an einem Abschnitt des Trägerkörpers (321) angeordnet ist, der einem Datenanschluss und dem Masseanschluss der Träger-Aufnahme (310) zugewandt ist, wenn er in der Träger-Aufnahme (310) montiert ist.

7. Elektronisches Gerät (200) mit dem Einzelkartenträger (320) nach Anspruch 1, wobei das elektronische Gerät (200) Folgendes umfasst:
ein Gehäuse, das das äußere Erscheinungsbild des elektronischen Geräts (200) bildet, wobei der Einzelkartenträger (320) so konstruiert ist, dass er über eine Öffnung (202), die in einem Abschnitt einer Seitenfläche des Gehäuses definiert ist, aus dem Inneren des Gehäuses herausgenommen werden kann;
eine mit der Öffnung (202) verbundene Träger-Aufnahme (310), die einen Raum definiert, in dem der Einzelkartenträger (320) aufgenommen ist;
mindestens einen ersten Anschluss (3111), der innerhalb der Träger-Aufnahme (310) so angeordnet ist, dass er sich in Richtung des zweiten Bereichs des Trägerkörpers (321) des in der Träger-Aufnahme (310) aufgenommenen Einzelkartenträgers (320) erstreckt, wobei der mindestens eine erste Anschluss (3111) den Masseanschluss und den mindestens einen weiteren Anschluss umfasst; und
mindestens einen zweiten Anschluss (3131), der innerhalb der Träger-Aufnahme (310) so angeordnet ist, dass er sich in Richtung des ersten Bereichs des in der Träger-Aufnahme (310) aufgenommenen Trägerkörpers (321) erstreckt;
wobei der Blindkontakt (330) des Einzelkartenträgers (320) so konfiguriert ist, dass er mit dem mindestens einen ersten Anschluss (3111) in Kontakt steht, um einen ersten Spannungspegel des mindestens einen ersten Anschlusses (3111) auf einen vorbestimmten zweiten Spannungspegel zu ändern.

8. Elektronisches Gerät (200) nach Anspruch 7, wobei der mindestens eine zweite Anschluss (3131) so konfiguriert ist, dass er elektrisch mit der Karte (220) verbunden werden kann, die in den im ersten Bereich des Trägerkörpers (321) definierten Kartenaufnahmeabschnitt (3211) eingeführt werden kann, während der Trägerkörper (321) in der Träger-Aufnahme (310) aufgenommen ist.

9. Elektronisches Gerät (200) nach Anspruch 7, wobei der mindestens eine weitere Anschluss einen Datenanschluss umfasst und
wobei der Datenanschluss und der Masseanschluss durch den Blindkontakt (330) elektrisch miteinander verbunden sind, wenn der Trägerkörper (321) in der Träger-Aufnahme (310) aufgenommen ist.

10. Elektronisches Gerät (200) nach Anspruch 7, wobei der erste Bereich in einer ersten Oberfläche (3210) des Einzelkartenträgers (320) definiert ist,
wobei der zweite Bereich in einer zweiten Oberfläche (3220) des Einzelkartenträgers (320) definiert ist, die gegenüber der ersten Oberfläche (3210) liegt.

11. Elektronisches Gerät (200) nach Anspruch 7, wobei der erste Bereich und der zweite Bereich in derselben Oberfläche des Einzelkartenträgers (320) definiert sind,
wobei der erste Bereich und der zweite Bereich entlang einer Einführrichtung (A) des Einzelkartenträgers (320) definiert sind.

12. Elektronisches Gerät (200) nach Anspruch 7, wobei der erste Bereich und der zweite Bereich in derselben Oberfläche des Trägerkörpers (321) definiert sind,
wobei der erste Bereich und der zweite Bereich so definiert sind, dass sie senkrecht zu einer Einführrichtung (A) des Einzelkartenträgers (320) stehen.

13. Elektronisches Gerät (200) nach Anspruch 7,
wobei der mindestens eine weitere Anschluss einen Datenanschluss umfasst und
wobei der Blindkontakt (330) an einem Abschnitt des Trägerkörpers (321) angeordnet ist, der einem Datenanschluss und einem Masseanschluss der Träger-Aufnahme (310) zugewandt ist, wenn er in der Träger-Aufnahme (310) aufgenommen ist.

14. Elektronisches Gerät (200) nach Anspruch 7, umfassend ferner:
einen Prozessor (600), der elektrisch mit dem mindestens einen ersten Anschluss (3111) und dem mindestens einen zweiten Anschluss (3131) verbunden ist,
wobei der Prozessor (600) dazu konfiguriert ist,
als Reaktion darauf, dass der Einzelkartenträger (320) in die Träger-Aufnahme (310) eingeführt wird, Strom an den mindestens einen ersten Anschluss (3111) anzulegen und anschließend einen Spannungspegel des mindestens einen ersten Anschlusses (3111) zu erfassen; und
festzustellen, dass der eingeführte Einzelkartenträger (320) eine einzelne SIM-Karte trägt, wenn der vorbestimmte zweite Spannungspegel für den mindestens einen ersten Anschluss (3111) erfasst wird.

15. Elektronisches Gerät (200) nach Anspruch 14, umfassend ferner:
eine Ausgabevorrichtung (640), die elektrisch mit dem Prozessor (600) verbunden ist,
wobei der Prozessor (600) dazu konfiguriert ist, ein Ergebnis der Feststellung über die Ausgabevorrichtung (640) auszugeben.

## Revendications

1. Plateau de carte unique (320) détachable d'un équipement électronique (200), le plateau de carte unique (320) comprenant :
un corps de plateau (321), comprenant une portion de réception de carte (3211) et configuré pour être logé dans une prise de plateau (310) de l'équipement électronique (200), dans lequel la portion de réception de carte (3211) est définie dans une première zone du corps de plateau (321) et configurée pour accueillir une carte (220) ;
un couvercle de plateau (323) disposé à une extrémité du corps de plateau (321) ; et **caractérisé en ce que** le plateau de carte unique comprend également
un contact virtuel (330) disposé dans une seconde zone du corps de plateau (321) différente de la première zone, dans lequel le contact virtuel (330) connecte électriquement une borne de terre de la prise de plateau (310) à au moins une autre borne lorsque le corps de plateau (321) est monté dans la prise de plateau (310).

2. Plateau de carte unique (320) selon la revendication 1, dans lequel la première zone est définie dans une première surface (3210) du corps de plateau (321),
dans lequel la seconde zone est définie dans une seconde surface (3220) du corps de plateau (321) à l'opposé de la première surface (3210).

3. Plateau de carte unique (320) selon la revendication 1, dans lequel la première zone et la seconde zone sont définies dans la même surface du corps de plateau (321),
dans lequel la première zone et la seconde zone sont définies selon une direction d'insertion (A) du plateau de carte unique (320).

4. Plateau de carte unique (320) selon la revendication 1, dans lequel la première zone et la seconde zone sont définies dans la même surface du corps de plateau (321),
dans lequel la première zone et la seconde zone sont définies pour être perpendiculaires à une direction d'insertion (A) du plateau de carte unique (320).

5. Plateau de carte unique (320) selon la revendication 1, dans lequel le contact virtuel (330) est configuré pour connecter électriquement une borne de données et la borne de terre de la prise de plateau (310) l'une à l'autre.

6. Plateau de carte unique (320) selon la revendication 1, dans lequel le contact virtuel (330) est disposé sur une partie du corps de plateau (321) faisant face à une borne de données et à la borne de terre de la prise de plateau (310) une fois monté dans la prise de plateau (310).

7. Équipement électronique (200), comprenant le plateau de carte unique (320) selon la revendication 1, l'équipement électronique (200) comprenant :
un boîtier formant une apparence externe de l'équipement électronique (200), dans lequel le plateau de carte unique (320) est construit pour être détachable d'un intérieur du boîtier par une ouverture (202) définie dans une partie d'une surface latérale du boîtier ;
une prise de plateau (310) reliée à l'ouverture (202) et définissant un espace où est logé le plateau de carte unique (320) ;
au moins une première borne (3111) disposée à l'intérieur de la prise de plateau (310) pour s'étendre vers la seconde zone du corps de plateau (321) du plateau de carte unique (320) logé dans la prise de plateau (310), dans laquelle l'au moins une première borne (3111) comprend la borne de terre et l'au moins une autre borne ; et
au moins une seconde borne (3131) disposée à l'intérieur de la prise de plateau (310) pour s'étendre vers la seconde zone du corps de plateau (321) logé dans la prise de plateau (310) ;
dans lequel le contact virtuel (330) du plateau de carte unique (320) est configuré pour être en contact avec l'au moins une première borne (3111) afin de changer un premier niveau de tension de l'au moins une première borne (3111) à un second niveau de tension prédéterminé.

8. Équipement électronique (200) selon la revendication 7, dans lequel l'au moins une seconde borne (3131) sont configurées pour être connectées électriquement à la carte (220) insérable dans la portion de réception de carte (3211) définie dans la première zone du corps de plateau (321) tandis que le corps de plateau (321) est logé dans la prise de plateau (310).

9. Équipement électronique (200) selon la revendication 7, dans lequel l'au moins une autre borne comprend une borne de données, et
dans lequel la borne de données et la borne de terre se connectent électriquement l'une à l'autre par l'intermédiaire du contact virtuel (330) lorsque le corps de plateau (321) est logé dans la prise de plateau (310).

10. Équipement électronique (200) selon la revendication 7, dans lequel la première zone est définie dans une première surface (3210) du plateau de carte unique (320),
dans lequel la seconde zone est définie dans une seconde surface (3220) du plateau de carte unique (320) à l'opposé de la première surface (3210).

11. Équipement électronique (200) selon la revendication 7, dans lequel la première zone et la seconde zone sont définies dans la même surface du plateau de carte unique (320),
dans lequel la première zone et la seconde zone sont définies selon une direction d'insertion (A) du plateau de carte unique (320).

12. Équipement électronique (200) selon la revendication 7, dans lequel la première zone et la seconde zone sont définies dans la même surface du corps de plateau (321),
dans lequel la première zone et la seconde zone sont définies pour être perpendiculaires à une direction d'insertion (A) du plateau de carte unique (320).

13. Équipement électronique (200) selon la revendication 7,
dans lequel l'au moins une autre borne comprend une borne de données, et
dans lequel le contact virtuel (330) est disposé sur une partie du corps de plateau (321) faisant face à une borne de données et à une borne de terre de la prise de plateau (310) une fois logé dans la prise de plateau (310).

14. Équipement électronique (200) selon la revendication 7, comprenant en outre :
un processeur du corps (600), connecté électriquement à l'au moins une première borne (3111) et à l'au moins une seconde borne (3131),
dans lequel le processeur (600) est configuré pour :
mettre sous tension l'au moins une première borne (3111) en réponse au fait que le plateau de carte unique (320) est inséré dans la prise de plateau (310), puis détecter un niveau de tension de l'au moins une première borne (3111) ; et
déterminer que le plateau de carte unique (320) inséré supporte une seule carte SIM lorsque le second niveau de tension prédéterminé est détecté pour l'au moins une première borne (3111).

15. Équipement électronique (200) selon la revendication 14, comprenant en outre :
un dispositif de sortie (640), connecté électriquement au processeur (600) ;
dans lequel le processeur (600) est configuré pour produire un résultat de la détermination via le dispositif de sortie (640).
